(19) Europäisches Patentamt
European Patent Office
Office européen des brevets

(11) **EP 4 317 270 A1**

(12) **EUROPEAN PATENT APPLICATION**
published in accordance with Art. 153(4) EPC

(43) Date of publication:
**07.02.2024 Bulletin 2024/06**

(21) Application number: **22780296.4**

(22) Date of filing: **22.03.2022**

(51) International Patent Classification (IPC):
**C08J 5/18** (2006.01)          **C08G 63/18** (2006.01)

(52) Cooperative Patent Classification (CPC):
**C08G 63/18; C08J 5/18**

(86) International application number:
**PCT/JP2022/013082**

(87) International publication number:
**WO 2022/210081 (06.10.2022 Gazette 2022/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.03.2021   JP 2021057665**

(71) Applicants:
• **Bell Polyester Products, Inc.
Yamaguchi 747-0823 (JP)**
• **Daiwa Can Company
Tokyo 100-7009 (JP)**
• **FUJIFILM Corporation
Tokyo 106-8620 (JP)**

(72) Inventors:
• **MISAKA, Ryota
Houfu-shi, Yamaguchi 747-0823 (JP)**

• **KATSUMA, Keita
Houfu-shi, Yamaguchi 747-0823 (JP)**
• **OKIMOTO, Masaya
Houfu-shi, Yamaguchi 747-0823 (JP)**
• **UMEDA, Yuta
Houfu-shi, Yamaguchi 747-0823 (JP)**
• **NOZAKI, Akane
Houfu-shi, Yamaguchi 747-0823 (JP)**
• **MIYASAKA, Rei
Fujinomiya-shi, Shizuoka 418-8666 (JP)**
• **NAGAO, Yukiharu
Fujinomiya-shi, Shizuoka 418-8666 (JP)**
• **HAMADA, Yasuhiro
Fujinomiya-shi, Shizuoka 418-8666 (JP)**

(74) Representative: **Henkel & Partner mbB
Patentanwaltskanzlei, Rechtsanwaltskanzlei
Maximiliansplatz 21
80333 München (DE)**

(54) **POLYESTER RESIN**

(57)     A polyester resin contains a polymer of an acid component (A) and an alcohol component (B). The component (A) contains 80 mol% or more of a 2,6-naphthalenedicarboxylic acid component with respect to a total amount of the component (A). The component (B) contains at least two types selected from the group consisting of 1,4-butanediol, 1,4-cyclohexanedimethanol, and ethylene glycol. The content of the at least one type of the component (B) is 80 mol% or more with respect to a total amount of the component (B).

EP 4 317 270 A1

**Description**

Cross Reference to Related Applications

The present invention is based upon and claims the benefit of the priority of Japanese Patent Application No. 2021-57665 (filed on March 30, 2021), the entire of which is incorporated herein in its entirety by reference.

Technical Field

The present disclosure relates to a polyester resin.

Background Art

Polyester resins are used in various applications. For example, polyester resins are used for containers etc. as well as optical components such as optical lenses, optical films, etc. For example, optical films formed by polyester resins are used for liquid crystal displays (see, for example, Patent Literature 1).
Patent Literature 1 discloses a polarizer protective film made mainly from a polyethylene terephthalate resin.

Citation List

Patent Literature

Patent Literature 1: WO2011/162198A1

Summary of Invention

Technical Problem

In cases of using a polyester film as an optical film, the polyester film is required to have high transparency and not give rise to rainbow-like unevenness.
There are polyester films in which a multitude of oligomers are deposited on the film surface when placed in a high temperature environment. Deposition of oligomers causes the polyester film to whiten, thus impairing transparency. Therefore, in order to retain the polyester film's transparency, it is desired to inhibit production of oligomers even when the film is placed in a high temperature environment.
"Rainbow-like unevenness" refers to a phenomenon wherein rainbow-like irregularities in color occur when a film is viewed from an oblique direction with respect to the film surface. The occurrence of rainbow-like unevenness may lead to deterioration in image quality. Rainbow-like unevenness becomes less likely to occur as the film's retardation in the in-plane direction and thickness direction increases. Therefore, by increasing the film thickness, it is possible to inhibit the occurrence of rainbow-like unevenness. Increasing the film thickness, however, will increase the thickness of the liquid crystal display to which the film is applied, which is unfavorable.
A film made from a polyethylene terephthalate resin, as disclosed in Patent Literature 1, is likely to produce oligomers in high temperature environments, and also, high retardation cannot be achieved in cases where the film thickness is thin.
Further, to achieve high retardation, it is common practice to produce a polyester film by stretching a polyester resin in one direction at a high stretch ratio. Such a stretching process, however, increases the thermal shrinkage rate in the direction perpendicular to the stretching direction. A polyester film having a large thermal shrinkage rate may suffer from problems such as deformation in appearance and deterioration in optical performance due to dimensional changes in high temperature environments.
Therefore, there is a demand for polyester resins in which production of oligomers is inhibited even in high temperature environments, and with which high retardation can be achieved even when formed into polyester films with thin film thickness without the need for a high stretch ratio. There is also a demand for polyester resins having high dimensional stability in high temperature environments even when formed into polyester films.

Solution to Problem

According to a first aspect of the present disclosure, a polyester resin comprising a polymer of an acid component (A) and an alcohol component (B) is disclosed. The component (A) contains 80 mol% or more of a 2,6-naphthalenedicarboxylic acid component with respect to a total amount of the component (A). The component (B) contains at least two types selected from the group consisting of 1,4-butanediol, 1,4-cyclohexanedimethanol, and ethylene glycol. A total amount of the at least two types of components is 80 mol% or more with respect to a total amount of the component (B).

Advantageous Effects of Invention

The polyester resin of the present disclosure has high intrinsic birefringence. Thus, with the polyester resin of the present disclosure, it is possible to obtain a polyester film having high retardation. In this way, it is possible to inhibit the occurrence of rainbow-like unevenness in film-form polyester resin.

The polyester resin of the present disclosure is inhibited from producing oligomers even in high temperature environments. Thus, with the polyester resin of the present disclosure, it is possible to obtain a polyester film in which deterioration in transparency is inhibited in high temperature environments.

The polyester resin of the present disclosure is capable of offering a polyester film having sufficient retardation even without increasing the stretch ratio. Thus, with the polyester resin of the present disclosure, it is possible to obtain a polyester film having high dimensional stability in high temperature environments.

Description of Embodiments

According to a prefered mode of the above first aspect, the polyester resin has a degree of polymerization of from 100 to 5000.

According to a prefered mode of the above first aspect, the polyester resin has an intrinsic birefringence of 0.15 or greater.

According to a prefered mode of the above first aspect, the component (B) consists of from 35 to 75 mol% of butanediol and from 25 to 65 mol% of 1,4-cyclohexanedimethanol with respect to the total amount of the component (B).

According to a prefered mode of the above first aspect, the polyester resin has a film shape having a thickness of from 20 to 100 μm. The polyester resin has an in-plane retardation of from 4,000 to 20,000 nm.

According to a prefered mode of the above first aspect, the component (B) consists of from 5 to 80 mol% of ethylene glycol and from 20 to 95 mol% of butanediol with respect to the total amount of the component (B).

According to a prefered mode of the above first aspect, the polyester resin has a film shape having a thickness of from 20 to 120 μm. The polyester resin has an in-plane retardation of from 4,000 to 22,000 nm.

According to a prefered mode of the above first aspect, the component (B) consists of from 82 to 95 mol% of ethylene glycol and from 5 to 18 mol% of 1,4-cyclohexanedimethanol with respect to the total amount of the component (B).

According to a prefered mode of the above first aspect, the polyester resin has a film shape having a thickness of from 20 to 130 μm. The polyester resin has an in-plane retardation of from 4,000 to 15,000 nm.

According to a prefered mode of the above first aspect, a change in film turbidity after being heated at 150°C for 100 hours is 1.5% or less.

According to a prefered mode of the above first aspect, a thermal shrinkage rate, in both a machine stretching direction and a crosswise stretching direction of film stretching, when heated at 150°C for 30 minutes is 2% or less with respect to a length before being heated.

According to a prefered mode of the above first aspect, a minor endothermic peak temperature is 150°C or higher.

According to a prefered mode of the above first aspect, when the film-shaped polyester resin is heated at 150°C for 100 hours, the number of oligomers is 400 or less per 1 mm$^2$ of the film surface.

In the present Description and Scope of Claims, each of the acid components and alcohol components may encompass derivatives thereof. For example, an acid component may encompass derivatives of the acid component (e.g., esters).

Polyester resins according to a first embodiment will be described below. "Polyester resin" as referred to in the present disclosure encompasses shaped/molded products thereof (e.g., polyester films). The polyester resin of the present disclosure is preferably a crystalline polyester resin.

The polyester resin of the present disclosure contains a polymer of an acid component (A) and an alcohol component (B). In the present disclosure, "polymer" may encompass copolymers constituted by two or more types of monomer components and crosslinked polymers (cross-polymers). In the present Description and Scope of Claims, each of the acid components and alcohol components may also encompass components produced from derivatives (e.g., esters) of acid compounds and/or alcohol compounds.

In the present disclosure, the acid component (A) may encompass polycarboxylic acid components, i.e., compounds having a plurality of carboxy groups and/or derivatives thereof. The alcohol component (B) may encompass polyol components, i.e., compounds (polyhydroxy compounds) having a plurality of hydroxy groups and/or derivatives thereof.

The compositional makeup of the polyester resin can be deemed to be the same as the compositional makeup of the monomers prepared as materials. Below, the "total amount of a component" may refer to the total number of moles of monomers serving as the basis of that component.

{Acid Component (A)}

The acid component (A) contains a 2,6-naphthalenedicarboxylic acid component.

The content of the 2,6-naphthalenedicarboxylic acid component is preferably 80 mol% or more, more preferably 85 mol% or more, even more preferably 90 mol% or more, and further preferably 95 mol% or more, with respect to the total amount of the component (A). The content of the 2,6-naphthalenedicarboxylic acid component may be 100 mol% with respect to the total amount of the component (A). If the content of the 2,6-naphthalenedicarboxylic acid component is less than 80 mol%, intrinsic birefringence may deteriorate, and rainbow-like unevenness may become likely to occur when the resin is formed into a polyester film.

The acid component (A) may contain acid components other than the 2,6-naphthalenedicarboxylic acid component, in an amount that does not change the essential properties of the composition of the present disclosure. Examples of other acid components may include: aromatic dicarboxylic acid components, such as terephthalic acid, isophthalic acid, 1,4-naphthalenedicarboxylic acid, 4,4'-diphenyldicarboxylic acid, 9,9-bis(2-carboxyethyl)fluorene, etc.; aliphatic dicarboxylic acid components, such as succinic acid, glutaric acid, adipic acid, pimelic acid, suberic acid, azelaic acid, sebacic acid, etc.; and alicyclic dicarboxylic acid components, such as 1,2-, 1,3-, 1,4-cyclohexanedicarboxylic acid, 1,4-, 1,5-, 2,6-, 2,7-decahydronaphthalenedicarboxylic acid, etc. The aforementioned acid component may be used singly, or two or more types may be used in combination.

{Alcohol Component (B)}

The alcohol component (B) contains at least two types selected from the group consisting of 1,4-butanediol, 1,4-cyclohexanedimethanol, and ethylene glycol.

The total amount of the at least two types of components is preferably 80 mol% or more, more preferably 90 mol% or more, with respect to the total amount of the component (B). The total amount of the at least two types of components may be 100 mol% with respect to the total amount of the component (A). If the total amount of the at least two types of components is less than 80 mol%, rainbow-like unevenness is prone to occur.

It is preferred that the polyester resin of the present disclosure has a degree of polymerization of 100 or greater. If the degree of polymerization is less than 100, the mechanical strength deteriorates when the resin is in a film-form. The degree of polymerization of the polyester resin of the present disclosure is preferably 5,000 or less, more preferably 3,000 or less, even more preferably 2,000 or less, and further preferably 1,500 or less. If the degree of polymerization exceeds 5,000, the melt viscosity becomes too high at the time of film production and stretching, which may thus impair productivity at the time of film formation.

"Degree of polymerization" in the present disclosure refers to the number of repetitions of structural units, and is a value found by dividing the weight-average molecular weight of the polyester resin by the molecular weight of a single structural unit found by calculation.

{Intrinsic Viscosity}

The polyester resin of the present disclosure may have an intrinsic viscosity (IV value) of 0.45 dl/g ($10^2$ cm$^3$/g) or greater, or 0.47 dl/g or greater. The polyester resin composition of the present disclosure may have an intrinsic viscosity of 0.90 dl/g or less, 0.88 dl/g or less, 0.80 dl/g or less, 0.75 dl/g or less, 0.70 dl/g or less, or 0.68 dl/g or less. The intrinsic viscosity may be defined as the intrinsic viscosity at 20°C found through measurement with an automatic viscosity measurement device equipped with an Ubbelohde viscometer by dissolving 0.5000 ± 0.0005 g of a sample into a mixed solvent containing phenol and tetrachloroethane at a ratio of 60:40 (mass ratio).

{Intrinsic Birefringence}

The polyester resin of the present disclosure may have an intrinsic birefringence of 0.15 or greater, preferably 0.18 or greater, more preferably 0.21 or greater. For example, the polyester resin of the present disclosure may have an intrinsic birefringence of 0.5 or less, 0.45 or less, 0.4 or less, or 0.35 or less.

In the present disclosure, the birefringence value at an infinite stretch ratio is referred to as "intrinsic birefringence". First, a plurality of pieces of film-shaped polyester resin (polyester films) are prepared through stretching by varying the stretch ratios ($\lambda$), and the birefringence of each polyester film is measured. Next, the degree of orientation (F) corresponding to each stretch ratio is calculated from the following equations. Then, the birefringence values are plotted against the respective degrees of orientation. Assuming that the molecules within the film are ideally oriented to their extreme, an approximate straight line is found using the least-squares method, and the birefringence when the degree of orientation (F) is 1.0 is calculated by extrapolation. This birefringence can be defined as "intrinsic birefringence".

$$F = (3\cos^2\theta - 1)/2$$

$$\cos^2\theta = (1+r^2)(r-\tan^{-1}r)/r^3$$

$$r = (\lambda^3 - 1)^{0.5}$$

In the present disclosure, "stretch ratio" refers to the ratio of the length, in one direction (uniaxial direction), of the film after being stretched with respect to the length, in the same direction, of the film before being stretched.

{Glass Transition Temperature}

The polyester resin of the present disclosure preferably has a glass transition temperature of 40°C or higher, preferably 70°C or higher. If the glass transition temperature is below 40°C, dimensional stability after being formed into a film may deteriorate. The polyester resin of the present disclosure preferably has a glass transition temperature of 150°C or lower, preferably 120°C or lower. If the glass transition temperature exceeds 150°C, film production may become difficult. The glass transition temperature can be measured, for example, using a differential scanning calorimetry (DSC) device.

{Crystallization Temperature}

The polyester resin of the present disclosure preferably has a crystallization temperature of 80°C or higher. The polyester resin of the present disclosure preferably has a crystallization temperature of 200°C or lower. The difference between the crystallization temperature and the glass transition temperature is preferably 2°C or greater, more preferably 5°C or greater, more preferably 10°C or greater, even more preferably 15°C or greater. If the crystallization temperature is too close to the glass transition temperature, crystallization tends to progress at the time of shaping, which may impair film formability. The crystallization temperature can be measured, for example, by using a differential scanning calorimeter.

{Melting Point (Tm)}

The polyester resin of the present disclosure preferably has a melting point of 200°C or higher, preferably 220°C or higher, more preferably 240°C or higher. If the melting point is below 200°C, the temperature in the heating treatment after film formation becomes low, which may impair dimensional stability. The polyester resin of the present disclosure may have a melting point of 300°C or lower. The melting point can be measured, for example, by using a differential scanning calorimeter. The melting point refers to the temperature at the peak top of an exothermic peak found in the course of heating the polyester film from its solid state from 30°C to 300°C at a temperature rise rate of 2°C/minute according to JIS K7122 (1987). In cases where there are a plurality of exothermic peaks, the melting point refers to the temperature of the peak top located most toward the high temperature side. The melting point refers to the temperature at the peak top of an endothermic peak with the greatest energy amount in a chart obtained in the course of heating the polyester resin from its solid state to its molten state at a temperature rise rate of 2°C/minute through differential scanning calorimetry. The presence of a melting point indicates that the polyester resin is crystalline.

{Specific Gravity}

The polyester resin of the present disclosure may have a specific gravity of 1.20 g/cm$^3$ or greater, 1.23 g/cm$^3$ or greater, 1.26 g/cm$^3$, or greater, or 1.29 g/cm$^3$ or greater. The polyester resin of the present disclosure may have a specific gravity of 1.38 g/cm$^3$ or less, 1.35 g/cm$^3$ or less, 1.32 g/cm$^3$ or less, or 1.29 g/cm$^3$ or less. The specific gravity can be measured in conformity with JIS Z8807 (2012).

{First Mode}

A first mode of the first embodiment will be described.
In the first mode, the component (B) is constituted by a butanediol component and a 1,4-cyclohexanedimethanol component.

The content of the butanediol component is preferably 35 mol% or more with respect to the total amount of the component (B). The content of the butanediol component may be 40 mol% or more, or 45 mol% or more, with respect to the total amount of the component (B). The content of the butanediol component is preferably 75 mol% or less with respect to the total amount of the component (B). The content of the butanediol component may be 70 mol% or less, or 65 mol% or less, with respect to the total amount of the component (B).

The content of the 1,4-cyclohexanedimethanol component is preferably 25 mol% or more with respect to the total amount of the component (B). The content of the 1,4-cyclohexanedimethanol component may be 30 mol% or more, or 35 mol% or more, with respect to the total amount of the component (B). If the content of the 1,4-cyclohexanedimethanol component is less than 25 mol%, crystallization is accelerated, which may cause whitening when the resin is formed into a polyester film, thus impairing transparency. The content of the 1,4-cyclohexanedimethanol component is preferably 65 mol% or less with respect to the total amount of the component (B). The content of the 1,4-cyclohexanedimethanol component may be 60 mol% or less, or 55 mol% or less, with respect to the total amount of the component (B). If the content of the 1,4-cyclohexanedimethanol component exceeds 65 mol%, the melting point of the polyester resin will become high, thus making it difficult to form a polyester film.

The polyester resin according to the first mode may have an intrinsic birefringence of 0.15 or greater, preferably 0.18 or greater. The polyester resin of the present disclosure may have an intrinsic birefringence of 0.35 or less.

{Second Mode}

A second mode of the first embodiment will be described.

In the second mode, the component (B) is constituted by an ethylene glycol component and a butanediol component.

The content of the ethylene glycol component is preferably 5 mol% or more with respect to the total amount of the component (B). The content of the ethylene glycol component may be 10 mol% or more, 15 mol% or more, or 20 mol% or more, with respect to the total amount of the component (B). The content of the ethylene glycol component is preferably 80 mol% or less with respect to the total amount of the component (B). The content of the ethylene glycol component may be 75 mol% or less, 70 mol% or less, or 65 mol% or less, with respect to the total amount of the component (B).

The content of the butanediol component is preferably 20 mol% or more with respect to the total amount of the component (B). The content of the butanediol component may be 25 mol% or more, 30 mol% or more, or 35 mol% or more, with respect to the total amount of the component (B). The content of the butanediol component is preferably 95 mol% or less with respect to the total amount of the component (B). The content of the butanediol component may be 90 mol% or less, 85 mol% or less, or 80 mol% or less, with respect to the total amount of the component (B).

The polyester resin according to the second mode may have an intrinsic birefringence of 0.15 or greater, preferably 0.18 or greater. The polyester resin of the present disclosure may have an intrinsic birefringence of 0.35 or less.

{Third Mode}

A third mode of the first embodiment will be described.

In the third mode, the component (B) is constituted by an ethylene glycol component and a 1,4-cyclohexanedimethanol component.

The content of the ethylene glycol component is preferably 82 mol% or more with respect to the total amount of the component (B). The content of the ethylene glycol component may be 85 mol% or more with respect to the total amount of the component (B). The content of the ethylene glycol component is preferably 95 mol% or less with respect to the total amount of the component (B). The content of the ethylene glycol component may be 90 mol% or less with respect to the total amount of the component (B).

The content of the 1,4-cyclohexanedimethanol component is preferably 5 mol% or more with respect to the total amount of the component (B). The content of the 1,4-cyclohexanedimethanol component may be 10 mol% or more with respect to the total amount of the component (B). The content of the 1,4-cyclohexanedimethanol component is preferably 18 mol% or less with respect to the total amount of the component (B). The content of the 1,4-cyclohexanedimethanol component may be 15 mol% or less with respect to the total amount of the component (B). If the content of the 1,4-cyclohexanedimethanol component exceeds 18 mol%, the crystallinity of the polyester film may deteriorate. This makes it difficult to inhibit rainbow-like unevenness in the polyester film, and also, the thermal shrinkage rate may increase.

The polyester resin according to the third mode may have an intrinsic birefringence of 0.15 or greater, preferably 0.18 or greater, more preferably 0.22 or greater, even more preferably 0.25 or greater. The polyester resin of the present disclosure may have an intrinsic birefringence of 0.40 or less.

The alcohol component (B) may contain components other than 1,4-butanediol, 1,4-cyclohexanedimethanol and ethylene glycol, in an amount that does not change the essential properties of the composition of the present disclosure. Examples of other alcohol components may include propylene glycol components, hexanediol components, octanediol components, decanediol components, ethylene oxide adduct-type bisphenol A components, ethylene oxide adduct-type bisphenol S components, trimethylol propane components, etc. The aforementioned alcohol component may be used singly, or two or more types may be used in combination.

The polyester resin of the present invention may contain known additives in an amount that does not change the essential properties of the polyester resin of the present disclosure. Examples of additives that may be used may include polymerization catalysts, antistatic agents, UV absorbers, thermostabilizers, light stabilizers, mold-release agents, antioxidants, slip additives, plasticizers, pigments, dyes, etc.

{Polyester Film}

The polyester resin of the present disclosure may have a film shape. Stated differently, the polyester resin of the present disclosure may encompass a film form. In the present disclosure, a film-form polyester resin is referred to as a polyester film.

For example, the polyester film of the present disclosure may have a film thickness of 20 $\mu$m or greater, 25 $\mu$m or greater, 30 $\mu$m or greater, or 35 $\mu$m or greater. For example, the polyester film of the present disclosure may have a film thickness of 120 $\mu$m or less, 100 $\mu$m or less, 90 $\mu$m or less, 85 $\mu$m or less, 80 $\mu$m or less, 75 $\mu$m or less, 70 $\mu$m or less, 65 $\mu$m or less, 60 $\mu$m or less, or 55 $\mu$m or less. For example, the polyester film may have a film thickness of from 25 to 100 $\mu$m, preferably from 30 to 90 $\mu$m, more preferably from 35 to 55 $\mu$m.

The polyester film of the present disclosure is a film in which the molecules' degree of orientation (degree of crystallization) has been increased by stretching. It is preferred that the polyester film of the present disclosure is a film that has been stretched in one direction at a stretch ratio of 1.5 times or more, preferably 2 times or more. For example, the polyester film of the present disclosure may be a film that has been stretched in one direction at a stretch ratio of 2.5 times or more, 3 times or more, 3.5 times or more, 4 times or more, 4.5 times or more, or 5 times or more. For example, the polyester film of the present disclosure may be a film that has been stretched in one direction at a stretch ratio of 5 times or less. The polyester film of the present disclosure may be a film that has been stretched in a transverse (crosswise) direction. The "film thickness" of the aforementioned polyester film may be the film thickness of the polyester film after being subjected to the stretching process. By making the stretch ratio low, it is possible to increase the physical strength of the polyester film. Further, by making the stretch ratio low, it is possible to inhibit an increase in thermal shrinkage rate.

Unevenness in thickness of the polyester film of the present disclosure is preferably 5% or less, more preferably 4.5% or less, even more preferably 4% or less, and further preferably 3% or less. "Unevenness in thickness" of the polyester film as referred to in the present disclosure can be calculated through the following equation by measuring the polyester film's thickness at a discretionary location over a predetermined length (e.g., 1 m) using a continuous thickness measurement device.

$$\text{Unevenness in thickness (\%)} = \{(T_{max}-T_{min})/T_{ave}\}\times 100$$

$T_{max}$: Thickness of thickest part
$T_{min}$: Thickness of thinnest part
$T_{ave}$: Average value of thickness of measured part

{Refractive Index}

The refractive index (Nx) of the polyester film of the present disclosure is preferably 1.72 or greater, more preferably 1.74 or greater, in the transverse direction (TD) of film stretching. The refractive index (Nx) of the polyester film of the present disclosure is preferably 1.85 or less, more preferably 1.82 or less, in the transverse direction (TD) of film stretching.

The refractive index (Ny) of the polyester film of the present disclosure is preferably 1.55 or greater in the machine direction (MD) of film stretching. The refractive index (Ny) of the polyester film of the present disclosure is preferably 1.65 or less, more preferably 1.62 or less, in the machine direction (MD) of film stretching.

The refractive index (Nz) of the polyester film of the present disclosure is preferably 1.57 or less, more preferably 1.54 or less, in the thickness direction (ND) of film stretching.

The refractive index can be measured in conformity with "Determination of Refractive Index of Plastics (Method A)" in JIS K7142 (2008).

The polyester film of the present disclosure may have an in-plane-direction retardation (Re), in the in-plane direction (planar direction), of 4,000 nm or higher, preferably 5,000 nm or higher, when the thickness is from 20 to 120 $\mu$m. The polyester film of the present disclosure may have an in-plane-direction retardation of 40,000 nm or less when the thickness is from 20 to 120 $\mu$m. The in-plane retardation of the polyester film of the present disclosure may be, for example, 20,000 nm or less, or 15,000 nm or less.

The polyester film of the present disclosure may have an in-plane-direction retardation (Re) of 4,000 nm or higher, preferably 5,000 nm or higher, more preferably 6,000 nm or higher, more preferably 8,000 nm or higher, more preferably 9,000 nm or higher, even more preferably 10,000 nm or higher, when the thickness is from 35 to 80 $\mu$m and/or from 35 to 55 $\mu$m. If the retardation is less than 5,000 nm, interference colors may be produced when the film is observed from an oblique direction. The polyester film of the present disclosure may have an in-plane-direction retardation of 20,000 nm or less when the thickness is from 35 to 80 $\mu$m and/or from 35 to 55 $\mu$m. The in-plane-direction retardation may be 15,000 nm or less, 12,000 nm or less, 10,000 nm or less, or 8,000 nm or less. Even when the retardation is greater than 20,000 nm, no further improvement can be achieved in terms of rainbow-like unevenness, and the film thickness increases, thus impairing the usability as an industrial material.

The polyester film of the present disclosure may have a thickness-direction retardation (Rth), in the thickness direction, of 4,000 nm or higher, preferably 5,000 nm or higher, when the thickness is from 20 to 120 $\mu$m, preferably when the thickness is from 35 to 80 $\mu$m and/or from 35 to 55 $\mu$m. The polyester film of the present disclosure may have a thickness-direction retardation of 20,000 nm or less when the thickness is from 20 to 120 $\mu$m, preferably when the thickness is from 35 to 80 $\mu$m and/or from 35 to 55 $\mu$m. The thickness-direction retardation of the polyester film of the present disclosure may be, for example, 18,000 nm or less, 15,000 nm or less, 12,000 nm or less, 10,000 nm or less, or 8,000 nm or less.

In the polyester film of the present disclosure, the ratio (Re/Rth) between the in-plane retardation (Re) and the thickness-direction retardation (Rth) is preferably 0.8 or greater, more preferably 0.9 or greater, even more preferably 0.95 or greater. If the ratio Re/Rth is less than 0.8, the isotropy in birefringence is small, and, depending on the angle of observation, rainbow-like unevenness is prone to occur.

{Minor Endothermic Peak Temperature}

It is preferred that the polyester film of the present disclosure has a minor endothermic peak temperature of 150°C or higher. It is preferred that the minor endothermic peak temperature is preferably 160°C or higher, more preferably 170°C or higher, more preferably 180°C or higher, even more preferably 190°C or higher. The minor endothermic peak temperature is a temperature equal to or below the melting point. By raising the minor endothermic peak temperature, it is possible to raise the temperature range in which the thermal shrinkage rate becomes high and thereby inhibit thermal shrinkage in high temperature environments. The minor endothermic peak temperature (Tmeta) refers to the minor endothermic peak before the melting point peak in a differential scanning calorimetry chart obtained by heating the polyester film from its solid state from 30°C to 300°C at a temperature rise rate of 2°C/minute using a differential scanning calorimeter according to JIS K7122 (1987).

{First Mode}

For example, according to the first mode, in cases where the polyester film has a film shape having a thickness of from 20 to 100 $\mu$m, the polyester resin may have an in-plane retardation of 4,000 nm or higher, preferably 5,000 nm or higher. The polyester resin may have an in-plane retardation of 20,000 nm or less, or 18,000 nm or less.

For example, according to the first mode, in cases where the polyester film has a film shape having a thickness of from 35 to 80 $\mu$m, the polyester resin may have an in-plane retardation of 4,000 nm or higher, preferably 5,000 nm or higher, more preferably 6,000 nm or higher. The polyester resin may have an in-plane retardation of 15,000 nm or less, 14,000 nm or less, 13,000 nm or less, 12,000 nm or less, or 11,000 nm or less.

For example, according to the first mode, in cases where the polyester film has a film shape having a thickness of from 35 to 55 $\mu$m, the polyester resin may have an in-plane retardation of 4,000 nm or higher, preferably 5,000 nm or higher, more preferably 6,000 nm or higher. The polyester resin may have an in-plane retardation of 15,000 nm or less, 12,000 nm or less, 10,000 nm or less, 9,000 nm or less, or 8,000 nm or less.

For example, according to the first mode, the polyester film of the present disclosure may have a thickness-direction retardation of 4,000 nm or higher, preferably 5,000 nm or higher, more preferably 6,000 nm or higher, when the thickness is from 20 to 120 $\mu$m, preferably from 35 to 80 $\mu$m and/or from 35 to 55 $\mu$m. The polyester film of the present disclosure may have a thickness-direction retardation of 20,000 nm or less, or 15,000 nm or less, when the thickness is from 20 to 120 $\mu$m, preferably from 35 to 80 $\mu$m and/or from 35 to 55 $\mu$m.

For example, the polyester film according to the first mode is preferably a film that has been stretched in one direction at a stretch ratio of 1.5 times or more, preferably 2 times or more. For example, the polyester film according to the first mode may be a film that has been stretched in one direction at a stretch ratio of 2.5 times or more, 3 times or more, 3.5 times or more, or 4 times or more. For example, the polyester film according to the first mode may be a film that has been stretched in one direction at a stretch ratio of 5 times or less.

For example, the polyester film according to the first mode may be a polyester film that: has been stretched in the transverse direction at a stretch ratio of from 3 to 5 times; has a thickness of from 35 to 80 $\mu$m and/or from 35 to 55 $\mu$m; and has the aforementioned retardation.

{Second Mode}

For example, according to the second mode, in cases where the polyester film has a film shape having a thickness of from 20 to 120 $\mu$m, the polyester resin may have an in-plane retardation of 4,000 nm or higher, preferably 5,000 nm or higher, more preferably 6,000 nm or higher. The polyester resin may have an in-plane retardation of 22,000 nm or less, or 20,000 nm or less.

For example, according to the second mode, in cases where the polyester film has a film shape having a thickness of from 35 to 80 $\mu$m, the polyester resin may have an in-plane retardation of 4,000 nm or higher, preferably 5,000 nm or higher, more preferably 6,000 nm or higher, even more preferably 7,000 nm or higher. The polyester resin may have an in-plane retardation of 15,000 nm or less, 14,000 nm or less, 13,000 nm or less, 12,000 nm or less, or 11,000 nm or less.

For example, according to the second mode, in cases where the polyester film has a film shape having a thickness of from 35 to 55 $\mu$m, the polyester resin may have an in-plane retardation of 4,000 nm or higher, preferably 5,000 nm or higher, more preferably 6,000 nm or higher, even more preferably 7,000 nm or higher. The polyester resin may have an in-plane retardation of 15,000 nm or less, 12,000 nm or less, 10,000 nm or less, 9,000 nm or less, or 8,000 nm or less.

For example, according to the second mode, the polyester film of the present disclosure may have a thickness-direction retardation of 4,000 nm or higher, preferably 5,000 nm or higher, more preferably 6,000 nm or higher, when the thickness is from 20 to 120 $\mu$m, preferably from 35 to 80 $\mu$m and/or from 35 to 55 $\mu$m. The polyester film of the present disclosure may have a thickness-direction retardation of 20,000 nm or less, or 15,000 nm or less, when the thickness is from 20 to 120 $\mu$m, preferably from 35 to 80 $\mu$m and/or from 35 to 55 $\mu$m.

For example, the polyester film according to the second mode is preferably a film that has been stretched in one direction at a stretch ratio of 1.5 times or more, preferably 2 times or more. For example, the polyester film according to the second mode may be a film that has been stretched in one direction at a stretch ratio of 2.5 times or more or 3 times or more. For example, the polyester film according to the second mode may be a film that has been stretched in one direction at a stretch ratio of 5 times or less.

For example, the polyester film according to the second mode may be a polyester film that: has been stretched in the transverse direction at a stretch ratio of from 3 to 5 times; has a thickness of from 35 to 80 $\mu$m and/or from 35 to 55 $\mu$m; and has the aforementioned retardation.

{Third Mode}

For example, according to the third mode, in cases where the polyester film has a film shape having a thickness of from 20 to 100 $\mu$m, the polyester resin may have an in-plane retardation of 4,000 nm or higher, preferably 5,000 nm or higher, more preferably 6,000 nm or higher. The polyester resin may have an in-plane retardation of 15,000 nm or less, or 12,000 nm or less.

For example, according to the third mode, in cases where the polyester film has a film shape having a thickness of from 35 to 80 $\mu$m, the polyester resin may have an in-plane retardation of 4,000 nm or higher, preferably 5,000 nm or higher, more preferably 6,000 nm or higher. The polyester resin may have an in-plane retardation of 15,000 nm or less, or 12,000 nm or less.

For example, according to the third mode, in cases where the polyester film has a film shape having a thickness of from 35 to 55 $\mu$m, the polyester resin may have an in-plane retardation of 4,000 nm or higher, preferably 5,000 nm or higher, more preferably 6,000 nm or higher. The polyester resin may have an in-plane retardation of 15,000 nm or less, 12,000 nm or less, 10,000 nm or less, 9,000 nm or less, or 8,000 nm or less.

For example, according to the third mode, the polyester film of the present disclosure may have a thickness-direction retardation of 4,000 nm or higher, preferably 5,000 nm or higher, more preferably 6,000 nm or higher, when the thickness is from 20 to 130 $\mu$m, preferably from 35 to 80 $\mu$m and/or from 35 to 55 $\mu$m. The polyester film of the present disclosure may have a thickness-direction retardation of 12,000 nm or less, or 10,000 nm or less, when the thickness is from 20 to 130 $\mu$m, preferably from 35 to 80 $\mu$m and/or from 35 to 55 $\mu$m.

For example, the polyester film according to the third mode is preferably a film that has been stretched in one direction at a stretch ratio of 1.5 times or more, preferably 2 times or more. For example, the polyester film according to the third mode may be a film that has been stretched in one direction at a stretch ratio of 2.5 times or more, 3 times or more, 3.5 times or more, or 4 times or more. For example, the polyester film according to the second mode may be a film that has been stretched in one direction at a stretch ratio of 5 times or less.

For example, the polyester film according to the third mode may be a polyester film that: has been stretched in the transverse direction at a stretch ratio of from 3 to 5 times; has a thickness of from 35 to 80 μm and/or from 35 to 55 μm; and has the aforementioned retardation.

Retardation is a parameter defined as the product ($\Delta N \times d$) of the anisotropy ($\Delta N$) of refractive indices along two orthogonal axes on the film and the film's thickness d (nm), and serves as a yardstick for indicating optical isotropy and anisotropy. The retardation value can be found by measuring the biaxial refractive indices and the thickness according to known methods. In the present disclosure, the transverse direction of film stretching is defined as the x direction (one axis in the planar direction), the travel direction (machine direction) is defined as the y direction (the other axis in the planar direction), and the film's thickness direction (the direction with the smallest dimension) is defined as the z direction. The refractive index in the x direction is defined as Nx. The refractive index in the y direction is defined as Ny. The refractive index in the z direction is defined as Nz. The travel direction and the transverse direction refer respectively to the travel direction (machine direction) and the transverse direction (width direction) of the polyester resin in a film stretching device. The anisotropy $\Delta Nxy$ of the refractive indices in the film's planar direction, i.e., the x direction and the y direction, can be calculated as the absolute value of the difference between the biaxial refractive indices, i.e., |Nx-Ny|. Likewise, the two anisotropies $\Delta Nxz$, $\Delta Nyz$ in the film's thickness direction can be calculated as |Nx-Nz| and |Ny-Nz|, respectively. When the thickness of a polyester film is defined as d (nm), the planar-direction retardation (Re) can be found as the product ($\Delta Nxy \times d$) of the anisotropy ($\Delta Nxy$) of the refractive indices in the x direction and the y direction and the film's thickness d. The thickness-direction retardation (Rth) can be found as the mean value of the product ($\Delta Nxz \times d$) of the anisotropy ($\Delta Nxz$) of the refractive indices in the x direction and the z direction and the film's thickness d, and the product ($\Delta Nyz \times d$) of the anisotropy ($\Delta Nyz$) of the refractive indices in the y direction and the z direction and the film's thickness d.

When a birefringent polyester film is disposed on one side of a polarizer, linearly polarized light emitted from the polarizer is disturbed as the light passes through the polyester film. Further, the transmitted light exhibits interference colors specific to retardation, which is the product of the birefringence and the thickness of the polyester film. For example, in cases where the light has a broad continuous emission spectrum in the visible range, the interference color spectrum will have an envelope shape. So, by controlling the retardation of the polyester film, it becomes possible to obtain a spectrum similar to the emission spectrum of the light source. By making the emission spectrum of the light source and the interference color spectrum of transmitted light that has passed through the birefringent body similar to an envelope shape, it is possible to inhibit the occurrence of rainbow-like unevenness in color.

In the polyester film of the present disclosure, the amount of change in haze (amount of change in turbidity) $\Delta Hz$ is preferably 1.5% or less, more preferably 1.3% or less, even more preferably 1% or less, further preferably 0.5% or less. When the amount of change in haze is 1.5% or less, the polyester film's high transparency, which is required as a display member, can be retained even when the film is exposed to a high temperature environment.

The "amount of change in haze $\Delta Hz$" in the present disclosure refers to the amount of change in haze when the polyester film has been subjected to a heat treatment at 150°C for 100 hours. More specifically, the amount of change in haze can be calculated according to the following equation. In the following equation, "pre-heating haze" refers to the haze of the polyester film after being produced and before being subjected to a heating treatment. "Post-heating haze" refers to the haze of the polyester film after the film, for which the pre-heating haze has been measured, has been subjected to a heating treatment at 150°C for 100 hours. For example, the haze of the polyester film can be measured in conformity with "Testing Methods for Optical Properties of Plastics-Haze" in JIS K7105.

$$\Delta Hz = (\text{Post-heating haze}) - (\text{Pre-heating haze})$$

It is preferred that, in the polyester film of the present disclosure, the amount of deposition of oligomers is small in high temperature environments. Deposition of oligomers in a polyester film not only impairs the film's transparency, but also impairs the film's smoothness. For example, in cases where the polyester film is used in a liquid crystal display, production of oligomers in the polyester film may cause the polyester film to peel from an adhesion layer. In the polyester film of the present disclosure, it is preferred that, when the polyester film before being heated is subjected to a heating treatment at 150°C for 100 hours, the number of deposited oligomers is preferably 2,000 or less, more preferably 1,000 or less, even more preferably 500 or less, further preferably 400 or less, and further preferably 300 or less, per 1 mm$^2$ of the polyester film. The number of deposited oligomers can be visually counted by microscopic observation. For example, the oligomers to be counted may have a linear dimension of 2 μm or greater.

It is preferred that the polyester film of the present disclosure undergoes little dimensional change in the planar direction in high temperature environments. For example, in cases where the polyester film is used in a liquid crystal display, if the polyester film shrinks and the shape of the polyester film changes, unevenness will occur at the edges of the liquid crystal display. It is preferred that, when the polyester film of the present disclosure is subjected to a heating treatment at 150°C for 30 minutes, the thermal shrinkage rate is preferably 3% or less, more preferably 2% or less, even more preferably 1.5% or less, further preferably 1% or less, in both the machine direction (MD) and the transverse direction (TD) of film stretching.

The thermal shrinkage rate can be calculated according to the following equation. "Pre-heating dimension" refers to the dimension of the polyester film after being produced into a film and before being subjected to a heating treatment. "Post-heating dimension" refers to the dimension of the film after the film, for which the pre-heating dimension has been measured, has been subjected to a heating treatment at 150°C for 30 minutes.

$$\text{Thermal shrinkage rate (\%)} = \{(\text{Pre-heating dimension}) - (\text{Post-heating dimension})\}/(\text{Pre-heating dimension}) \times 100$$

The polyester film of the present disclosure may be a uniaxially stretched film or a biaxially stretched film. In cases of using the polyester film of the present disclosure as a polarizer protective film, it is preferred that the film is a uniaxially stretched film from the viewpoint of inhibiting rainbow-like unevenness when the film is observed from an oblique direction with respect to the film surface.

For example, the polyester film of the present disclosure is applicable to optical films, polarizer protective films, etc.

In the polyester resin of the present disclosure, there may be cases where the molecular structure, crystal structure, etc., are indefinite and where it is difficult, or utterly impractical, to directly define the polyester resin of the present disclosure based on its compositional makeup, structure, properties, etc. In such circumstances, it should be permissible to define the polyester resin of the present disclosure according to methods for producing the same.

Particularly, in the polyester film of the present disclosure, retardation is dependent on the degree of orientation of the molecules. It is, however, impossible or utterly impractical to directly define the degree of orientation of molecules in the polyester film. Therefore, it should be permissible to define the polyester film of the present disclosure according to methods for producing the polyester film (e.g., methods for stretching the polyester film, etc.).

The polyester resin of the present disclosure has a high intrinsic birefringence. Thus, the polyester film of the present disclosure can achieve high retardation. Thus, in the polyester film of the present disclosure, it is possible to inhibit the occurrence of rainbow-like unevenness. Particularly, it is possible to inhibit the occurrence of rainbow-like unevenness even when the film thickness is made thin. Thus, the polyester film of the present disclosure is applicable, for example, to liquid crystal displays. The film can also contribute to thickness reduction of liquid crystal displays.

The polyester resin of the present disclosure also has a high intrinsic birefringence. Thus, it is possible to produce a polyester film having sufficient retardation, even without increasing the stretch ratio. Thus, it is possible to increase the physical strength of the polyester film and also inhibit an increase in thermal shrinkage rate in a direction perpendicular to the stretching direction.

The polyester resin of the present disclosure can inhibit deterioration in transparency caused by high temperature environments. Thus, it is possible to retain high transparency required as a display member.

The polyester resin of the present disclosure can make the stretch ratio low in relation to the retardation to be achieved, and thus has little shrinkage and high dimensional stability even when the polyester film is subjected to heating processing.

The polyester resin of the present disclosure can inhibit oligomers from creating protrusions and can thus retain high smoothness even when the polyester film is subjected to heating processing. The polyester resin of the present disclosure is applicable to optical devices in high temperature environments.

The polyester resin of the present disclosure has a moderate crystallinity suitable for film production. Thus, the produced film can have high retardation, and crystal orientation can be controlled by film stretching, thereby providing the produced film with dimensional stability.

A method for producing the polyester resin according to the first embodiment will be described.

The method for producing the polyester resin of the present disclosure is not particularly limited, and can be conducted by a known polymerization method using a known catalyst. The method for producing the polyester resin of the present disclosure may be: a direct esterification method using an unsubstituted polycarboxylic acid as a starting material; or a method employing a transesterification reaction using an esterified product, such as dimethyl ester, as a starting material. In the production of the polyester resin of the present disclosure, to achieve a sufficient reaction rate, it is preferred to conduct, as a first stage, a transesterification reaction under atmospheric pressure by using a known catalyst, and then, as a second stage, a polycondensation reaction under reduced pressure by using a known catalyst.

As for acids and alcohols serving as materials of the polyester resin, it is possible to use the aforementioned compounds.

The transesterification reaction can be conducted, for example, by: placing the various compounds used as polymerization materials, as well as other copolymerization components used as necessary, in a reaction vessel equipped with a heater, a stirrer and a distillation tube; adding a reaction catalyst thereto and raising the temperature while stirring the materials under atmospheric pressure in an inert gas atmosphere; and causing reaction while removing, by distillation, by-products produced by the reaction, such as methanol etc. The reaction temperature may be from 150°C to 270°C, preferably from 160°C to 260°C. The reaction time may be approximately from 3 to 7 hours.

As for the catalyst for the transesterification reaction, it is preferred to use at least one type of metal compound. Preferred examples of metal elements may include sodium, potassium, calcium, titanium, lithium, magnesium, manganese, zinc, tin, cobalt, etc. Among the above, titanium compounds are preferable because they have high reactivity and can offer a favorable color tone to the obtained resin. The usage amount of the transesterification catalyst may be from 5 to 1000 ppm, preferably from 10 to 100 ppm, with respect to the polyester resin to be produced.

After termination of the transesterification reaction, it is preferred to add a phosphorus-containing compound in an amount at least equimolar to the transesterification catalyst. Examples of the phosphorus-containing compound may include phosphoric acid, phosphorous acid, trimethyl phosphate, triethyl phosphate, tributyl phosphate, trimethyl phosphite, triethyl phosphite, tributyl phosphite, etc. Among the above, trimethyl phosphate is particularly preferable. The rate of addition of the phosphorus-containing compound may be from 5 to 1000 ppm, preferably from 20 to 100 ppm, with respect to the polyester resin to be produced.

Following the transesterification reaction, it is possible to further conduct a polycondensation reaction up to a desired molecular weight. For example, the polycondensation reaction may be conducted by placing, in a reaction chamber, the product obtained after termination of the transesterification reaction, adding a polymerization catalyst to the chamber, and then gradually increasing the temperature and reducing the pressure within the reaction chamber. The pressure inside the chamber may be reduced from an atmospheric pressure atmosphere ultimately to 0.4 kPa or less, preferably 0.2 kPa or less. The temperature inside the chamber may be raised from 220-240°C ultimately to 250-290°C, preferably 250-270°C, and after reaching a predetermined torque, the reaction product can be extruded and collected from the bottom of the chamber. Typically, the reaction product may be extruded into water in strands, cooled, and then cut, to obtain pellets of the polyester resin composition.

As for the catalyst for the polycondensation reaction, it is preferred to use at least one type of metal compound. Preferred examples of metal elements may include titanium, germanium, antimony, aluminum, etc. Among the above, titanium compounds and germanium compounds are particularly preferable in cases of producing resins for optical uses, because they have high reactivity and can offer transparency and a favorable color tone to the obtained resin. Particularly, titanium compounds have high reactivity and are more inexpensive than germanium compounds. Further, titanium is not classified as a heavy metal, and thus, titanium compounds can reduce environmental load. The rate of addition of the polymerization catalyst may be from 10 to 1000 ppm, preferably from 30 to 100 ppm, with respect to the polyester resin to be produced.

A solid-state polymerization reaction may be conducted after the polycondensation reaction. The solid-state polymerization reaction can increase the intrinsic viscosity of the polyester resin.

A method for producing the polyester film of the present disclosure will be described.

The polyester film of the present disclosure can be produced according to a typical method for producing a polyester film. An example of a production method may involve: melting a polyester resin; extrusion-molding the non-oriented polyester into a sheet form; stretching the non-oriented polyester sheet in the travel direction by employing the difference in speed between rollers at a temperature equal to or above the glass transition temperature; then stretching the sheet in the transverse direction with a tenter; and subjecting the sheet to a heating treatment. The thickness of the non-oriented polyester before being stretched can be set with consideration given to the thickness of the final polyester film to be obtained, the stretch ratio, the retardation of the polyester film to be obtained, etc.

The lower the stretching temperature, the higher the retardation can be made. For example, the stretching temperature in cases of conducting a stretching process in one of either the travel direction or the transverse direction may preferably be from 80°C to 145°C, more preferably from 90°C to 140°C. In this temperature range, retardation can be made high, and also film whitening can be inhibited.

The higher the stretch ratio, the higher the retardation can be made. For example, the stretch ratio in the transverse direction may be 1.5 times or more, preferably 2 times or more, more preferably 2.5 times or more. For example, the stretch ratio in the transverse direction may be 3 times or more, 3.5 times or more, 4 times or more, or 4.5 times or more. For example, the stretch ratio in the transverse direction may be 6 times or less, 5 times or less, or 4.5 times or less. For example, the stretch ratio in the travel direction is preferably from 1 to 3 times, more preferably from 1 to 2.3 times. In this ratio range, retardation can be made high, and also, it is possible to inhibit the tendency for the film to become easily torn and also inhibit an increase in the film's thermal shrinkage rate.

To control the retardation to fall within the aforementioned specific range, it is preferred to control the ratio between the stretch ratio in the travel direction and the stretch ratio in the transverse direction. By increasing the difference between the stretch ratios in the longitudinal and lateral directions, retardation can be made even higher. For example, the difference between the stretch ratio in the travel direction and the stretch ratio in the transverse direction may be 1 or greater, preferably 2 or greater, more preferably 2.5 or greater, even more preferably 3 or greater.

After the stretching step, it is preferred to conduct a thermal fixing treatment in which the polyester film is subjected to heating. The thermal fixing treatment can promote crystallization of the polyester film and reduce the thermal shrinkage rate. It is preferred that the temperature for the thermal fixing treatment is higher than the temperature for the stretching process. For example, the temperature for the thermal fixing treatment is preferably from 165°C to 240°C, more preferably from 180°C to 230°C, even more preferably from 200°C to 220°C.

After the thermal fixing treatment, it is preferred to include a thermal relaxation treatment step in which the film's tension is relaxed (loosened) while heating. The relaxation direction may be one of either the same direction as the stretching direction or a direction perpendicular to the stretching direction. To stretch the film, both ends of the film are pinched (held) by a stretching device. In the present disclosure, the parts pinched by the stretching device are referred to as pinched parts. For example, the pinched parts are arranged at regular intervals along one end (travel direction) of the film. The relaxation treatment can be conducted, for example, by narrowing the interval between the pinched parts on both ends of the film, which are present in the transverse direction, or by narrowing the intervals between the pinched parts adjacent to one another along the travel direction. The relaxation step can make the film's local thermal shrinkage rate uniform. The heating temperature in the thermal relaxation treatment step may be the same as the temperature for the thermal fixing treatment.

For example, the relaxation rate in the relaxation treatment step may be 0.5% or greater, 1% or greater, 2% or greater, or 3% or greater. For example, the relaxation rate may be 10% or less, 5% or less, 3% or less, or 2% or less. The relaxation rate can be calculated according to the following equation.

$$\text{Relaxation rate (\%)} = \{(\text{``Interval between pinched parts before relaxation treatment''} - \text{``Interval between pinched parts after relaxation treatment''}) / \text{``Interval between pinched parts before relaxation treatment''}\} \times 100$$

A method for using the polyester resin according to the first embodiment will be described.

In cases of using the polyester film of the present disclosure as an optical film, it is preferred to use, as a light source, a white light source having a broad continuous emission spectrum. For example, the white light source may preferably have a wavelength range of from 450 to 750 nm, preferably in the visible range.

When a birefringent polyester film is disposed on one side of a polarizer, linearly polarized light emitted from the polarizer is disturbed as the light passes through the polyester film. Further, the transmitted light exhibits interference colors specific to retardation, which is the product of the birefringence and the thickness of the polyester film. Therefore, if a light source having a discontinuous emission spectrum, such as a cold-cathode tube or a hot-cathode tube, is used as the light source, the transmitted-light intensities may differ depending on wavelength, which may cause rainbow-like unevenness in color.

Examples

The polyester resins of the present disclosure and methods for producing the same will be described below by way of examples. The polyester resins of the present disclosure and methods for producing the same, however, are not limited to the following examples.

{Test Example 1}

A reactor equipped with a stirrer, a rectifying column, and a methanol distillation condenser was charged with a mixture containing 100 mol% of 2,6-naphthalenedicarboxylic acid dimethyl ester as an acid component, and 70 mol% of 1,4-butanediol and 30 mol% of ethylene glycol as alcohol components. After dissolving the mixture in a solvent at 190°C, 30 ppm of titanium tetra-n-butoxide was added, and the temperature was raised from 190°C to 225°C over 3 hours, to conduct a transesterification reaction while distilling out the produced methanol from the system. After termination of the transesterification reaction, the temperature was gradually raised from 230°C to 250°C over 75 minutes and the pressure was gradually reduced from atmospheric pressure to 0.2 kPa, and the reaction was terminated at a predetermined viscosity, and the product was extruded into cold water and pelletized with a strand cutter. Table 1 shows the physical properties. The intrinsic viscosity of the obtained polymer was 0.64 dl/g.

{Test Example 2}

A reactor equipped with a stirrer, a rectifying column, and a methanol distillation condenser was charged with a mixture containing 100 mol% of 2,6-naphthalenedicarboxylic acid dimethyl ester as an acid component, and 55 mol% of 1,4-butanediol and 45 mol% of 1,4-cyclohexanedimethanol as alcohol components. After dissolving the mixture in a solvent at 190°C, 30 ppm of titanium tetra-n-butoxide was added, and the temperature was raised from 190°C to 225°C over 3 hours, to conduct a transesterification reaction while distilling out the produced methanol from the system. After termination of the transesterification reaction, the temperature was gradually raised from 230°C to 275°C over 75 minutes and the pressure was gradually reduced from atmospheric pressure to 0.2 kPa, and the reaction was terminated at a predetermined viscosity, and the product was extruded into cold water and pelletized with a strand cutter. Table 1 shows the physical properties. The intrinsic viscosity of the polymer was 0.64 dl/g.

{Test Example 3}

A reactor equipped with a stirrer, a rectifying column, and a methanol distillation condenser was charged with a mixture containing 100 mol% of 2,6-naphthalenedicarboxylic acid dimethyl ester as an acid component, and 85 mol% of ethylene glycol and 15 mol% of 1,4-cyclohexanedimethanol as alcohol components. After dissolving the mixture in a solvent at 190°C, 30 ppm of titanium tetra-n-butoxide was added, and the temperature was raised from 190°C to 225°C over 3 hours, to conduct a transesterification reaction while distilling out the produced methanol from the system. After termination of the transesterification reaction, the temperature was gradually raised from 230°C to 250°C over 75 minutes and the pressure was gradually reduced from atmospheric pressure to 0.2 kPa, and the reaction was terminated at a predetermined viscosity, and the product was extruded into cold water and pelletized with a strand cutter. Table 1 shows the physical properties. The intrinsic viscosity of the polymer was 0.49 dl/g.

{Test Example 4}

A reactor equipped with a stirrer, a rectifying column, and a methanol distillation condenser was charged with a mixture containing 100 mol% of terephthalic acid as an acid component, and 100 mol% of ethylene glycol as alcohol components. After dissolving the mixture in a solvent at 190°C, 30 ppm of titanium tetra-n-butoxide was added, and the temperature was raised from 190°C to 225°C over 3 hours, to conduct a transesterification reaction while distilling out the produced methanol from the system. After termination of the transesterification reaction, the temperature was gradually raised from 230°C to 250°C over 75 minutes and the pressure was gradually reduced from atmospheric pressure to 0.2 kPa, and the reaction was terminated at a predetermined viscosity, and the product was extruded into cold water and pelletized with a strand cutter. Table 1 shows the physical properties. The intrinsic viscosity of the polyethylene terephthalate (PET) resin was 0.65 dl/g.

{Test Example 5}

A reactor equipped with a stirrer, a rectifying column, and a methanol distillation condenser was charged with a mixture containing 100 mol% of 2,6-naphthalenedicarboxylic acid dimethyl ester as an acid component and 100 mol% of ethylene glycol as an alcohol component. After dissolving the mixture in a solvent at 190°C, 30 ppm of titanium tetra-n-butoxide was added, and the temperature was raised from 190°C to 225°C over 3 hours, to conduct a transesterification reaction while distilling out the produced methanol from the system. After termination of the transesterification reaction, the temperature was gradually raised from 230°C to 250°C over 75 minutes and the pressure was gradually reduced from atmospheric pressure to 0.2 kPa, and the reaction was terminated at a predetermined viscosity. The product was extruded into cold water and pelletized with a strand cutter. Next, a solid-state polymerization reaction was conducted, to thereby increase the intrinsic viscosity of the obtained polyester resin. Table 1 shows the physical properties. The intrinsic viscosity of the polyethylene naphthalate (PEN) resin was 0.71 dl/g.

The pellets obtained in Examples 1 to 5 were dried at 135°C for 12 hours. Using the dried polyester resins, various polyester films were produced at respective stretch ratios shown in Table 2.

The obtained polyester was subjected to a thermal fixing treatment. Hot air was blown onto the film surfaces from the upper and lower directions, and the maximum temperature (thermal fixing temperature) of the film surface temperature was controlled for 15 seconds to the temperature shown in Table 2.

Next, the polyester film subjected to the thermal fixing treatment was further subjected to a thermal relaxation treatment. Hot air was blown onto the film surfaces from the upper and lower directions, and thermal relaxation was conducted at the relaxation rate shown in Table 2 in the film transverse direction (TD) at the same temperature as the thermal fixing temperature.

The acronyms used in the Tables are as follows.

NDC: Naphthalenedicarboxylic acid
TPA: Terephthalic acid
EG: Ethylene glycol
BD: Butanediol
CHD: 1,4-Cyclohexanedimethanol

{Intrinsic Viscosity}

The polyester resin was dissolved in a mixed solvent containing 1,1,2,2-tetrachloroethane and phenol at a ratio of 40:60 (mass ratio), and the intrinsic viscosity was determined from the solution viscosity at 20°C.

{Specific Gravity}

The specific gravity of the polyester resin was measured using an automatic specific gravity meter (from Sartorius Group) in conformity with JIS Z8807 (2012).

{Presence/Absence of Crystallinity}

Present: A resin in which a melting point (Tm) appeared when measured with a differential scanning calorimeter was determined to be a crystalline resin.
Absent: A resin in which no melting point (Tm) appeared when measured with a differential scanning calorimeter was determined to be a non-crystalline resin.

{Glass Transition Temperature}

Using a differential scanning calorimeter (DSC-7 from PerkinElmer Co. Ltd.), the endothermic behavior of the polyester resin sample was observed in a nitrogen atmosphere while raising the temperature from 30°C at a rate of 2°C/minute, and the midpoint temperature in the endothermic behavior due to glass transition was determined as the glass transition temperature (Tg).

{Crystallization Temperature}

Using a differential scanning calorimeter (DSC-7 from PerkinElmer Co. Ltd.), the exothermic behavior of the polyester resin sample was observed in a nitrogen atmosphere while raising the temperature from 30°C at a rate of 2°C/minute, and the peak top in the exothermic behavior related to the crystallization temperature was determined as the crystallization temperature (Tc).

{Melting Point}

Using a differential scanning calorimeter (DSC-7 from PerkinElmer Co. Ltd.), the endothermic behavior of the polyester resin sample was observed in a nitrogen atmosphere while raising the temperature from 30°C at a rate of 2°C/minute, and the peak top in the endothermic behavior related to the melting point temperature was determined as the endothermic temperature (Tm).

{Minor Endothermic Peak Temperature}

Using a differential scanning calorimeter (DSC-7 from PerkinElmer Co. Ltd.), the endothermic behavior of the polyester film subjected to a thermal fixing treatment (and thermal relaxation treatment) was observed in a nitrogen atmosphere while raising the temperature from 30°C to 300°C at a rate of 2°C/minute, and the temperature of the minor endothermic peak before the melting point peak was determined as the minor endothermic peak temperature (Tmeta).

{Possibility of Film Formation}

After producing a non-stretched sheet, a stretched film was produced using a batch stretcher (biaxial stretching tester EX10-B1 from Toyo Seiki Seisaku-sho, Ltd.) by conducting uniaxial stretching in the travel direction at a stretch ratio of 3.5 times. If the produced film's appearance did not whiten and the film did not tear, film formation was determined as "pass".

{Intrinsic Birefringence}

Using each polyester resin having the respective compositional makeup shown in Table 1, films having thicknesses of from 30 to 300 $\mu$m were produced using a batch stretcher (biaxial stretching tester EX10-B1 from Toyo Seiki Seisaku-sho, Ltd.) by conducting uniaxial stretching in the travel direction. The film was stretched at a temperature at least 10°C higher than the glass transition temperature (Tg) at a rate of 1 mm/min at the respective stretch ratio shown in Table 2, to obtain the respective stretched film. The birefringence of each stretched film was measured with monochromatic light at 594 nm using an Abbe refractometer from Atago Co., Ltd. From the equations above, the degree of orientation was calculated based on the stretch ratio, and the intrinsic birefringence was found from the degree of orientation and birefringence.

{Refractive Index}

The polyester film was cut out in a 4×2 cm rectangular shape such that the long side coincided with the orientation axis direction in stretching, and this was employed as a measurement sample. For this measurement sample, the refractive indices (Nx, Ny, Nz) in the film's transverse direction (TD), machine direction (MD), and thickness direction (ND) were measured using a refractive index measurement device (Abbe refractometer DR-M4 from Atago Co., Ltd.; measurement wavelength: 589 nm) in conformity with JIS K7142 (2008). The refractive indices of the respective polyester films are shown in Table 5.

{Retardation}

The polyester film was cut out in a 4×2 cm rectangular shape such that the long side coincided with the orientation axis direction in stretching, and this was employed as a measurement sample. For this measurement sample, the refractive indices (Nx, Ny, Nz) in the x direction, y direction, and z direction were measured using a refractive index measurement device (Abbe refractometer NAR-4T from Atago Co., Ltd.; measurement wavelength: 594 nm). From the refractive indices in these directions, the in-plane retardation (Re) and the thickness-direction retardation (Rth) were determined from the calculations described above.

{Observation of Rainbow-Like Unevenness}

The stretched film was arranged under the crossed Nicols condition, and the presence/absence of occurrence of rainbow-like unevenness observed with a polarizing plate (backlight: white light-emitting diode) was determined according to the following.

A: No rainbow-like unevenness occurred in any of the parts.
A': Very slight rainbow-like unevenness was observed depending on the angle when observed from an oblique direction.
B: Slight rainbow-like unevenness was observed depending on the angle when observed from an oblique direction.
C: Rainbow-like unevenness was observed when observed from an oblique direction.
D: Rainbow-like unevenness was observed when observed from a frontal direction and an oblique direction.

{Evaluation of Amount of Change in Haze (ΔHz)}

The produced polyester film was cut out in a 50-mm square, and this was employed as a measurement sample. For this measurement sample, the pre-heating haze was measured in conformity with "Testing Methods for Optical Properties of Plastics-Haze" in JIS K7105. An NDH-300A-type turbidimeter from Nippon Denshoku Industries Co., Ltd. was used for the measurement device. After measuring the pre-heating haze, the measurement sample was set in an oven (INERT OVEN IPH-201 from Espec Corp.) heated to 150°C, and the measurement sample was taken out after 100 hours. The haze for this measurement sample was measured according to the same method as above, to find the post-heating haze. The difference in haze before and after heating was found as ΔHz.

$$\Delta Hz = \text{"Post-heating haze"} - \text{"Pre-heating haze"}$$

{Evaluation of Deposition of Oligomers}

The produced polyester film was cut out in a 200-mm square, and this was employed as a measurement sample.

The measurement sample was left to stand for 100 hours in an oven (INERT OVEN IPH-201 from Espec Corp.) heated to 150°C. After 100 hours, the surface of the measurement sample was subjected to aluminum vapor deposition and observed with a differential interference microscope at a total magnification of 500x, to visually count the number of deposited oligomers having a size of 2 $\mu$m or larger present on the surface. Based on the field-of-view of the microscope, the number of deposited oligomers per 1 mm$^2$ of the polyester film was calculated (number/mm$^2$).

{Evaluation of Dimensional Stability (Thermal Shrinkage Rate)}

The produced polyester film was cut out in a rectangular shape such that the sides thereof were parallel to the machine direction (MD) and the transverse direction (TD) perpendicular to the machine direction, and this was employed as a measurement sample. The length of each side of the measurement sample was measured. Next, the measurement sample was left to stand for 30 minutes in an oven (INERT OVEN IPH-201 from Espec Corp.) heated to 150°C. The measurement sample was taken out from the oven, and the length of each side was measured. The dimensional change (%) was calculated based on the lengths before and after heating of the measurement sample.

Table 1 shows the compositional makeup and physical properties of the polyester resins of Test Examples 1 to 5. Table 2 shows conditions for manufacturing polyester films using the polyester resins of Test Examples 1 to 5. Table 3 shows measurement results of the polyester films produced from the polyester resins of Test Examples 1 to 5. In each test example, the thickness of the polyester resin before being stretched is varied as appropriate depending on the intended stretch ratio and final thickness.

Table 4 shows theoretical values of retardation when the thickness of polyester films corresponding to Test Examples 1 to 3 and 5 were 38 $\mu$m and 50 $\mu$m. In Test Examples 1-4 and 1-5, the refractive index of Test Example 1-3 was used. In Test Examples 2-14 and 2-15, the refractive index of Test Example 2-13 was used. In Test Examples 3-7 and 3-8, the refractive index of Test Example 3-6 was used. In Test Examples 4-3 and 4-4, the refractive index of Test Example 4-2 was used. In Test Examples 5-2 and 5-3, the refractive index of Test Example 5-1 was used.

The PET resin according to Test Example 4 had low intrinsic birefringence. In Test Example 4-1, high retardation was obtained. Note, however, that even though the stretch ratio was as high as 5 times, the film thickness was as thick as 100 $\mu$m. The polyester film of Test Example 4-2 shown in Table 4, which was stretched at a stretch ratio of 4 times and had a thickness of 80 $\mu$m, had lower retardation than the polyester films according to Test Examples 1 to 3 in Table 3 having the same thickness. Thus, it is thought that polyethylene terephthalate cannot inhibit the occurrence of rainbow-like unevenness at a thin film thickness.

Further, as shown in Table 3, the PET polyester film of Test Example 4 had a large amount of change in haze, and also, the number of deposited oligomers was large. Furthermore, the thermal shrinkage rate was high. From these results, it is though that the film according to Test Example 4 is not suitable for optical devices to be used in high temperature environments.

Also, as shown in Table 3, the PEN resin according to Test Example 5 had a large amount of change in haze, and also, the number of deposited oligomers was large. From these results, it is though that the film according to Test Example 5 is not suitable for optical devices to be used in high temperature environments.

The polyester resins of Test Examples 1 to 3 had an intrinsic birefringence of 0.21 or greater. Thus, the polyester resins of Test Examples 1 to 3 had high retardation and the occurrence of rainbow-like unevenness was inhibited, even when the stretch ratio was from 2 to 5 times and the film thickness was reduced. Since sufficient retardation can be achieved without increasing the stretch ratio, it was possible to inhibit the tendency for the film to become easily torn, which arises at high stretch ratios, and also inhibit an increase in the film's thermal shrinkage rate.

In the polyester resins of Test Examples 1 to 3, it was found that a retardation of from 5,000 to 12,000 nm was obtained, even when the polyester films had thicknesses of 38 $\mu$m and 50 $\mu$m. From this result, it is thought that the polyester resins of Test Examples 1 to 3 can inhibit the occurrence of rainbow-like unevenness even at a thin film thickness.

In the polyester resins of Test Examples 1 to 3, the number of produced oligomers was small. This result shows that the polyester films of Test Examples 1 to 3 can maintain smoothness even when subjected to a heating treatment. This shows that the polyester films of Test Examples 1 to 3 are superior, as optical devices to be used in high temperature environments, compared to the polyester films of Test Examples 4 and 5.

The polyester resins of Test Examples 1 to 3 had a small amount of change in haze. This result shows that the polyester resins of Test Examples 1 to 3 can maintain transparency even when subjected to a heating treatment.

The polyester resins of Test Examples 1 to 3 also had a small thermal shrinkage rate. This result shows that the polyester resins of Test Examples 1 to 3 have high dimensional stability.

[Table 1]

| | | Test Example | 1 | 2 | 3 | 4 | 5 |
|---|---|---|---|---|---|---|---|
| Composition | Acid component (mol%) | NDC | 100 | 100 | 100 | - | 100 |
| | | TPA | - | - | - | 100 | - |
| | Alcohol component (mol%) | EG | 30 | - | 85 | 100 | 100 |
| | | BD | 70 | 55 | - | - | - |
| | | CHD | - | 45 | 15 | - | - |
| Intrinsic viscosity (dl/g) | | | 0.64 | 0.64 | 0.49 | 0.65 | 0.71 |
| Presence/absence of crystallinit | | | Present | Present | Present | Present | Present |
| Glass transition temperature (°C) | | | 77 | 89 | 115 | 80 | 120 |
| Crystallization temperature (°C) | | | 90 | 120 | 198 | 155 | 165 |
| Melting point (°C) | | | 208 | 238 | 248 | 260 | 267 |
| Possibility of Film Formation | | | Pass | Pass | Pass | Pass | Pass |
| Intrinsic birefringence | | | 0.21 | 0.22 | 0.32 | 0.14 | 0.20 |
| Specific gravity (g/cm$^3$) | | | 1.29 | 1.24 | 1.31 | 1.34 | 1.33 |

[Table 2]

| Test Example | | Stretch ratio | | Thermal fixing temperature (°C) | Relaxation rate (%) |
|---|---|---|---|---|---|
| | | MD | TD | | |
| 1 | 1-1 | 1 | 2 | 180 | - |
| | 1-2 | 1 | 3.5 | 180 | - |
| | 1-3 | 1 | 4 | 180 | - |
| 2 | 2-1 | 1 | 3 | 210 | 0 |
| | 2-2 | 1 | 3 | 210 | 2.8 |
| | 2-3 | 1 | 3.5 | 210 | 0 |
| | 2-4 | 1 | 3.5 | 210 | 0 |
| | 2-5 | 1 | 3.5 | 210 | 2.8 |
| | 2-6 | 1 | 4 | 210 | 0 |
| | 2-7 | 1 | 4 | 210 | 1.4 |
| | 2-8 | 1 | 4 | 210 | 2.8 |
| | 2-9 | 1 | 4.5 | 210 | 0 |
| | 2-10 | 1 | 4.5 | 210 | 2.8 |
| | 2-11 | 1 | 4.5 | 210 | 5 |
| 3 | 3-1 | 1 | 3 | 210 | 0 |
| | 3-2 | 1 | 4 | 210 | 0 |
| | 3-3 | 1 | 4 | 230 | 0 |
| | 3-4 | 1 | 4.5 | 210 | 0 |
| 4 | 4-1 | 1 | 5 | 180 | - |
| 5 | 5-1 | 1 | 4 | 210 | 0 |

[Table 3]

| Test Example | | Thickness (μm) | Re (nm) | Rth (nm) | Re/Rth | Rainbow-like unevenness | Minor endothermic peak temperature (°C) | ΔHaze (%) | Number of deposited oligomers (number/mm²) | Thermal shrinkage rate (%) | |
|---|---|---|---|---|---|---|---|---|---|---|---|
| | | | | | | | | | | MD | TD |
| 1 | 1-1 | 98 | 19345 | 12299 | 1.57 | A | 174 | | | 0.5 | 0.6 |
| | 1-2 | 50 | 10420 | 7375 | 1.41 | A | 175 | 0.3 | 202 | 0.5 | 0.6 |
| | 1-3 | 34 | 7086 | 5015 | 1.41 | A | 175 | | | 0.6 | 0.8 |
| | 2-1 | 48 | 8240 | 8620 | 0.96 | A | 203 | 0.2 | 0 | 0.2 | 0.0 |
| | 2-2 | 67 | 12022 | 11504 | 1.05 | A | 204 | | | 0.3 | -0.1 |
| | 2-3 | 51 | 8833 | 9625 | 0.92 | A | 203 | | | 0.6 | 0.1 |
| | 2-4 | 77 | 13103 | 11970 | 1.09 | A | 203 | | | 0.7 | 0.4 |
| | 2-5 | 41 | 6987 | 7893 | 0.89 | A | 204 | | | 0.7 | -0.1 |
| | 2-6 | 40 | 6854 | 7930 | 0.86 | A | 205 | | | 0.6 | 0.8 |
| | 2-7 | 39 | 6807 | 7728 | 0.88 | A | 205 | | | 0.2 | 0.3 |
| | 2-8 | 34 | 5819 | 6741 | 0.86 | A | 205 | | | 0.4 | 0.1 |
| | 2-9 | 34 | 6081 | 6947 | 0.88 | A | 205 | | | 0.5 | 0.8 |
| | 2-10 | 38 | 6996 | 7662 | 0.91 | A | 204 | | | 0.0 | 0.6 |
| | 2-11 | 53 | 9063 | 10123 | 0.90 | A | 205 | | | 0.5 | 0.2 |
| 3 | 3-1 | 85 | 14107 | 13539 | 1.04 | A | 204 | 0.8 | 135 | 0.5 | 0.6 |
| | 3-2 | 33 | 5505 | 4501 | 1.22 | A' | 203 | | | 0.5 | 0.8 |
| | 3-3 | 38 | 6351 | 5943 | 1.07 | A | 226 | | | 0.5 | 0.7 |
| | 3-4 | 29 | 6670 | 5118 | 1.30 | A | 204 | | | 0.5 | 0.8 |
| 4 | 4-1 | 100 | 10458 | 11305 | 0.90 | A | 175 | 5.6 | 2309 | 2.6 | 0.5 |
| 5 | 5-1 | 55 | 9240 | 10450 | 0.91 | A | 205 | 1.5 | 2713 | 0.2 | 0.1 |

[Table 4]

| Test Example | | Acid component (mol%) | | Alcohol component (mol%) | | | Stretch ratio | Thickness (μm) | Re (nm) | Rth (nm) | Re/Rth |
|---|---|---|---|---|---|---|---|---|---|---|---|
| | | NDC | TPA | EG | BD | CHD | TD | | | | |
| 1 | 1-4 | 100 | - | 30 | 70 | - | - | 50 | 10420 | 7375 | 1.41 |
| | 1-5 | | | | | | - | 38 | 7919 | 5605 | 1.41 |
| 2 | 2-12 | 100 | - | - | 55 | 45 | 4 | 59 | 10431 | 10390 | 1.00 |
| | 2-13 | | | | | | 4.5 | 54 | 9445 | 10317 | 0.92 |
| | 2-14 | | | | | | - | 50 | 8745 | 9553 | 0.92 |
| | 2-15 | | | | | | - | 38 | 6646 | 7260 | 0.92 |
| 3 | 3-5 | 100 | - | 85 | - | 15 | 3 | 38 | 6224 | 5973 | 1.04 |
| | 3-6 | | | | | | 5 | 32 | 6615 | 5244 | 1.26 |
| | 3-7 | | | | | | - | 50 | 10501 | 8324 | 1.26 |
| | 3-8 | | | | | | - | 38 | 7980 | 6326 | 1.26 |
| 4 | 4-2 | - | 100 | 100 | - | - | 4 | 80 | 8400 | 9500 | 0.88 |
| | 4-3 | | | | | | - | 50 | 5250 | 5940 | 0.88 |
| | 4-4 | | | | | | - | 38 | 3990 | 4510 | 0.88 |
| 5 | 5-2 | 100 | - | 100 | - | - | - | 50 | 8700 | 10400 | 0.84 |
| | 5-3 | | | | | | - | 38 | 6600 | 7900 | 0.84 |

[Table 5]

| Test Example | | Refractive index | | |
|---|---|---|---|---|
| | | Nx(TD) | Ny(MD) | Nz(ND) |
| 1 | 1-1 | 1.77 | 1.57 | 1.55 |
| | 1-2 | 1.79 | 1.58 | 1.53 |
| | 1-3 | 1.79 | 1.58 | 1.53 |

(continued)

| Test Example | | Refractive index | | |
|---|---|---|---|---|
| | | Nx(TD) | Ny(MD) | Nz(ND) |
| 2 | 2-1 | 1.78 | 1.61 | 1.52 |
| | 2-2 | 1.78 | 1.61 | 1.52 |
| | 2-3 | 1.79 | 1.61 | 1.51 |
| | 2-4 | 1.77 | 1.60 | 1.53 |
| | 2-5 | 1.79 | 1.62 | 1.51 |
| | 2-6 | 1.79 | 1.62 | 1.51 |
| | 2-7 | 1.79 | 1.62 | 1.51 |
| | 2-8 | 1.79 | 1.62 | 1.51 |
| | 2-9 | 1.80 | 1.62 | 1.50 |
| | 2-10 | 1.80 | 1.61 | 1.50 |
| | 2-11 | 1.79 | 1.62 | 1.51 |
| 3 | 3-1 | 1.78 | 1.61 | 1.53 |
| | 3-2 | 1.77 | 1.61 | 1.55 |
| | 3-3 | 1.78 | 1.62 | 1.54 |
| | 3-4 | 1.83 | 1.60 | 1.54 |
| 4 | 4-1 | 1.69 | 1.58 | 1.52 |
| 5 | 5-1 | 1.78 | 1.61 | 1.50 |

In relation to the polyester resins of Test Examples 1 to 3, the content by percentage of the alcohol components was varied, and the intrinsic viscosity, the glass transition temperature, the crystallization temperature, the melting point, and the intrinsic birefringence for each polyester resin were measured. Further, each polyester resin's usability as an optical film was tested. The methods for measuring the various physical properties are the same as those in the Test Examples above. Table 6 shows the compositional makeup and measurement results. The evaluation criteria for optical film usability are as described below.

A: Suitable for use as optical film.
B: Unsuitable for use as optical film.

Test Examples 1-6 to 1-8 were all capable of producing excellent films.

In Test Example 2-16, the polyester resin whitened at the time of film stretching. From this result, it is thought that, in cases where the alcohol component is constituted by a butanediol component and a 1,4-cyclohexanedimethanol component, the content of the butanediol component is preferably 75 mol% or less, and the content of the 1,4-cyclohexanedimethanol component is preferably 25 mol% or more. In Test Example 2-22, it was not possible to produce a film. From this result, it is thought that the content of the butanediol component is preferably 35 mol% or more, and the content of the 1,4-cyclohexanedimethanol component is preferably 65 mol% or less.

The polyester resin according to Test Example 3-9 had low crystallinity and was not suitable as an optical film. From this result, it is thought that, in cases where the alcohol component is constituted by an ethylene glycol component and a 1,4-cyclohexanedimethanol component, the content of the ethylene glycol component is preferably 82 mol% or more, and the content of the 1,4-cyclohexanedimethanol component is preferably 18 mol% or less.

[Table 6]

| | Acid component (mol%) | Alcohol component (mol%) | | | IV (dl/g) | Thermophysical properties | | | Intrinsic birefringence | Optical film usability |
|---|---|---|---|---|---|---|---|---|---|---|
| | NDC | EG | BD | CHD | | Tg | Tc | Tm | | |
| 1-6 | 100 | 30 | 70 | - | 0.49 | 100 | 179 | 229 | 0.21 | A |
| 1-7 | 100 | 55 | 45 | - | 0.57 | 92 | 115 | 201 | - | A |

(continued)

| | Acid component (mol%) | Alcohol component (mol%) | | | IV (dl/g) | Thermophysical properties | | | Intrinsic birefringence | Optical film usability |
|---|---|---|---|---|---|---|---|---|---|---|
| | NDC | EG | BD | CHD | | Tg | Tc | Tm | | |
| 1-8 | 100 | 70 | 30 | - | 0.63 | 77 | 90 | 208 | 0.19 | A |
| 2-16 | 100 | - | 80 | 20 | 0.57 | 78 | - | 228 | - | B |
| 2-17 | 100 | - | 70 | 30 | 0.65 | 79 | 96 | 220 | 0.23 | A |
| 2-18 | 100 | - | 60 | 40 | 0.63 | 83 | 104 | 222 | - | A |
| 2-19 | 100 | - | 55 | 45 | 0.64 | 89 | 120 | 234 | 0.22 | A |
| 2-20 | 100 | - | 50 | 50 | 0.50 | 88 | 130 | 229 | - | A |
| 2-21 | 100 | - | 40 | 60 | - | 94 | 129 | 255 | - | A |
| 2-22 | 100 | - | 30 | 70 | 0.62 | 96 | 131 | 269 | - | B |
| 3-9 | 100 | 80 | - | 20 | 0.42 | 114 | - | - | - | B |
| 3-10 | 100 | 85 | - | 15 | 0.49 | 115 | 198 | 248 | 0.32 | A |
| 3-11 | 100 | 90 | - | 10 | 0.46 | 116 | 199 | 253 | - | A |

The polyester resins and the methods for producing thereof according to the present invention have been described according to the foregoing embodiments and examples, but the invention is not limited to the foregoing embodiments and examples and may encompass various transformations, modifications, and improvements made to the various disclosed elements (including elements disclosed in the Claims, Description, and Drawings) within the scope of the invention and according to the fundamental technical idea of the present invention. Further, various combinations, substitutions, and selections of the various disclosed elements are possible within the scope of the claims of the invention.

Further issues, objectives, and embodiments (including modifications) of the present invention are revealed also from the entire disclosure of the invention including the Claims.

The numerical ranges disclosed herein are to be construed in such a manner that arbitrary numerical values and ranges falling within the disclosed ranges are treated as being concretely described herein, even where not specifically stated.

Industrial Applicability

The polyester resin of the present disclosure is applicable, for example, to polarizing plates, liquid crystal display devices, etc.

**Claims**

1. A polyester resin comprising a polymer of an acid component (A) and an alcohol component (B), wherein:

the component (A) comprises 80 mol% or more of a 2,6-naphthalenedicarboxylic acid component with respect to a total amount of the component (A);
the component (B) comprises at least two types selected from the group consisting of 1,4-butanediol, 1,4-cyclohexanedimethanol, and ethylene glycol; and
a total amount of the at least two types of components is 80 mol% or more with respect to a total amount of the component (B).

2. The polyester resin according to claim 1, wherein the polyester resin has a degree of polymerization of from 100 to 5000.

3. The polyester resin according to claim 1 or 2, wherein the polyester resin has an intrinsic birefringence of 0.15 or greater.

4. The polyester resin according to any one of claims 1 to 3, wherein the component (B) consists of from 35 to 75 mol% of butanediol and from 25 to 65 mol% of 1,4-cyclohexanedimethanol with respect to the total amount of the component (B).

5. The polyester resin according to claim 4, wherein the polyester resin has a film shape having a thickness of from 20 to 100 μm, and has an in-plane retardation of from 4,000 to 20,000 nm.

6. The polyester resin according to any one of claims 1 to 3, wherein the component (B) consists of from 5 to 80 mol% of ethylene glycol and from 20 to 95 mol% of butanediol with respect to the total amount of the component (B).

7. The polyester resin according to claim 6, wherein the polyester resin has a film shape having a thickness of from 20 to 120 μm, and has an in-plane retardation of from 4,000 to 22,000 nm.

8. The polyester resin according to any one of claims 1 to 3, wherein the component (B) consists of from 82 to 95 mol% of ethylene glycol and from 5 to 18 mol% of 1,4-cyclohexanedimethanol with respect to the total amount of the component (B).

9. The polyester resin according to claim 8, wherein the polyester resin has a film shape having a thickness of from 20 to 130 μm, and has an in-plane retardation of from 4,000 to 15,000 nm.

10. The polyester resin according to claim 5, 7, or 9, wherein a change in film turbidity after being heated at 150°C for 100 hours is 1.5% or less.

11. The polyester resin according to claim 5, 7, 9, or 10, wherein a thermal shrinkage rate, in both a machine stretching direction and a crosswise stretching direction of film stretching, when heated at 150°C for 30 minutes is 2% or less with respect to a length before being heated.

12. The polyester resin according to claim 5, 7, 9, 10, or 11, wherein a minor endothermic peak temperature is 150°C or higher.

13. The polyester resin according to claim 5, 7, 9, 10, 11, or 12, wherein, when the film-shaped polyester resin is heated at 150°C for 100 hours, the number of oligomers is 400 or less per 1 $mm^2$ of the film surface.

## INTERNATIONAL SEARCH REPORT

| International application No. |
|---|
| **PCT/JP2022/013082** |

**A.    CLASSIFICATION OF SUBJECT MATTER**

*C08J 5/18*(2006.01)i; *C08G 63/18*(2006.01)i
FI:    C08G63/18; C08J5/18 CFD

According to International Patent Classification (IPC) or to both national classification and IPC

**B.    FIELDS SEARCHED**

Minimum documentation searched (classification system followed by classification symbols)

C08J5/18; C08G63/18

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

**C.    DOCUMENTS CONSIDERED TO BE RELEVANT**

| Category* | Citation of document, with indication, where appropriate, of the relevant passages | Relevant to claim No. |
|---|---|---|
| X | KR 10-2010-0024304 A (SKC CO., LTD.) 05 March 2010 (2010-03-05)<br>claims, examples | 1-13 |
| X | JP 2010-64250 A (TORAY IND., INC.) 25 March 2010 (2010-03-25)<br>claims, examples | 1-13 |
| X | JP 2011-520141 A (3M INNOVATIVE PROPERTIES CO.) 14 July 2011 (2011-07-14)<br>claims, examples | 1-3, 8-13 |
| X | WO 2018/061730 A1 (TOYOBO CO., LTD.) 05 April 2018 (2018-04-05)<br>claims, examples | 1-4 |
| X | US 2017/0233523 A1 (ESTER INDUSTRIES LIMITED) 17 August 2017 (2017-08-17)<br>claims, examples | 1, 3 |

☐ Further documents are listed in the continuation of Box C.          ☑ See patent family annex.

| | |
|---|---|
| *    Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| **10 June 2022** | **21 June 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

| International application No. |
| PCT/JP2022/013082 |

| Patent document cited in search report | | | Publication date (day/month/year) | Patent family member(s) | | | Publication date (day/month/year) |
|---|---|---|---|---|---|---|---|
| KR | 10-2010-0024304 | A | 05 March 2010 | (Family: none) | | | |
| JP | 2010-64250 | A | 25 March 2010 | (Family: none) | | | |
| JP | 2011-520141 | A | 14 July 2011 | US<br>claims, examples<br>EP<br>KR<br>CN | 2009/0273836<br><br>2288503<br>10-2011-0007238<br>102046379 | A1<br><br>A1<br>A<br>A | |
| WO | 2018/061730 | A1 | 05 April 2018 | US<br>claims, examples<br>EP<br>CN<br>KR | 2020/0325272<br><br>3470451<br>109790281<br>10-2019-0055781 | A1<br><br>A1<br>A<br>A | |
| US | 2017/0233523 | A1 | 17 August 2017 | EP | 3177664 | A2 | |

Form PCT/ISA/210 (patent family annex) (January 2015)

**REFERENCES CITED IN THE DESCRIPTION**

**Patent documents cited in the description**

- JP 2021057665 A

- WO 2011162198 A1